# EUROPEAN PATENT APPLICATION

(11) **EP 4 513 332 A1**
(43) Date of publication of application: **26.02.2025**
(21) Application number: 23193489.4
(22) Date of filing: 25.08.2023
(51) Int. Cl.: G06F 9/50

(54) **METHOD AND SYSTEM FOR ORGANIZING A COMPUTING NETWORK**

(71) Applicant: Siemens Aktiengesellschaft, 80333 München (DE)
(72) Inventor: Bartholdt, Jörg, 81737 München (DE); Gesswein, Jürgen, 86156 Augsburg (DE)
(74) Representative: Siemens Patent Attorneys

(57) **Abstract**

The invention pertains to a method for organizing a computing network (cloud system), where function-modules run in environments, comprising the steps:
- examining the data-flow of the computing network (N) of an initial distribution of function-modules (F) in the computing network (N), the examination being based on predefined indicators, and generating a time distribution (X) based on
i) an order of an execution of function-modules (F) and/or
ii) a nesting of an execution of function-modules (F) and/or
iii) a use of same external datasets by function-modules (F)
on the computing devices (D),
- analyzing the time distribution (X) and computing a target-grouping (T) of function-modules (F) on the computing devices (D) that provides less latency times (ET) and/or more warm calls than the initial distribution,
- forming groups (G) of function-modules (F) based on the target-grouping (T),
- arranging function-modules (F) of the same group (G) on the same computing device (D).

The invention further pertains to a system for organizing a computing network as well as a computing network.

## Description

The invention pertains to a method and a system for organizing a computing network as well as a computing network. Especially, the invention pertains to an optimization of applications, especially server-less, applications (OSA), by merge and dispatch.

When executing code using a computing network, e.g. a cloud solution, there may appear latency times that could be a serious cost-factor, since they are added to the total costs while no effective work is done during this latency time.

Typically, a computing network comprises a plurality of computing devices arranged in a network structure and designed such that any computing device is able to receive an output of every other computing device, wherein every computing device comprises software modules in form of an environment-module and a function-module, and the function-module is able to be executed in an environment provided by the environment module and is designed to produce output data by processing received input data. Furthermore, every computing device is organized such that after receiving data to be processed by a function-module, the environment module is activated unless it is not already active, the data is processed by the function-module in the environment of the activated environment module, the processed data is outputted and after the output, the environment module stays activated a predefined warm-time period until it is deactivated,

In such computing network, there could be distinguished between "cold" and "warm" functions: A function requires the startup of the execution environment, e.g., a JVM for Java. The environment module runtime keeps that execution environment for some time ("warm-time period"), in expectation that it may be used soon again and to save the effort of re-initializing the execution environment. Execution of a function with initialization of execution environment is called a "cold" call, if a request for a function hits a still existent environment, it is called a "warm" call. Latency of call execution is much shorter for "warm" calls.

For example, in the computing system "AWS Lambda", usually there is one "Lambda function" for each task to be executed. From an operational point of view this is cumbersome as a lot of individual functions must be deployed and run in their environment. During the functions' running time, each function scales individually and there are probably more "cold" invocations of Lambda functions.

The latency can be reduced by some known methods:
A function could be kept "warm" by regularly executing it to keep it in the cache. However, some cloud services do not reveal their strategy concerning how long it keeps a function "warm" and when a function will be unloaded, and then the further invocations would be "cold". In addition, function dispatching and caching is subject to the infrastructure. Users have no influence and cannot deterministically keep more than one instance "warm".

There could be used programming languages having a small cold-start latency (e.g. compiled languages like Go) instead of start-up intensive once (e.g. JVM). However, for some applications this is no practical solution.

Optimized services could be used, like SnapStart and FireCraker that optimize a single function, but do not take a set of function into account.

It is the object of the present invention to improve the known systems and methods to facilitate an improvement in organizing a computing network, especially a server-less computing network.

This object is achieved by a method according to claim 1, a system according to claim 10 and a computing system according to claim 12.

A method according to the invention is applicable for organizing a computing network. Such networks are known in the art and comprises a plurality of computing devices arranged in a network structure and designed such that any computing device is able to receive an output of another computing device (preferably every other computing device, but not necessarily). Every computing device comprises software modules in form of an environment-module and a function-module, and the function-module is able to be executed in an environment provided by the environment module and is designed to produce output data by processing received input data. Furthermore, every computing device is organized such that after receiving data to be processed by a function-module, the environment module is activated unless it is not already active, the data is processed by the function-module in the environment of the activated environment module and the processed data is outputted and after the output. The environment module then stays activated a predefined warm-time period until it is deactivated.

The method according to the invention comprises the following steps:
- examining the data-flow of the computing network of an initial distribution of function-modules in the computing network, the examination being based on predefined indicators, and generating a time distribution based on
   i) an order of an execution of function-modules and/or
   ii) a nesting of an execution of function-modules and/or
   iii) a use of same external datasets by function-modules on the computing devices,
- analyzing the time distribution and computing a target-grouping of function-modules on the computing devices that provides less latency times and/or more warm calls than the initial distribution,
- forming groups of function-modules based on the target-grouping,
- arranging function-modules of the same group on the same computing device.

At first hand there is an initial distribution of function-modules in the computing network. This initial distribution may be regarded as an initial "program" for the workflow of function-modules that are or should be distributed on computing devices of the computing network. It should be noted that it is not necessary that the function-modules are yet implemented in the computing network. This initial distribution may be simulated.

It should be noted that "function-modules" are typically software modules, i.e. applications that may be compiled or run in an environment (e.g. by an interpreter). These function-modules may be referred to simply as "functions" e.g. as Lambda functions in AWS.

The examination of the data-flow is based on this initial distribution of function-modules and results in a time distribution. This time distribution shows the time periods between calls of function-modules or the "frequency" of the calls of different function-modules.

The examination is at least based on the predefined indicators
i) an order of an execution of function-modules and/or
ii) a nesting of an execution of function-modules and/or
iii) a use of same external datasets by function-modules

The order of an execution of function-modules relates to the time of calls independent to the relation of the called function-modules to each other. The called function-modules may be unrelated, e.g. a login and the execution of an application. A user may usually start a special application every day after the login procedure. However, the application and the login are two unrelated function-modules. This could be examined by looking at the calls.

The nesting of an execution of function-modules means that a second function-module is called by a first function-module and, thus, is executed directly after the first function-module or during the runtime of the first function-module. This could be examined by looking at the calls, but also by looking at the structure of the function-modules (e.g. the programming code).

Some function-modules may use datasets that are not part of the function-modules themselves, but stored in an external facility, e.g. a permanent memory or a database. When a function-module uses this dataset, it must first be retrieved what could result in a latency time. The use of same external datasets (not part of the function-module) could be examined by looking at the calls for retrieval of these datasets, but also by looking at the structure of the function-modules (e.g. the programming code).

After the examination, the time distribution comprises information about what function-module is called and/or what external data is retrieved at which point of time and/or at which time-period after the last call.

Now, the time distribution is analyzed. This could e.g. be done by looking at patterns and/or extracting all pairs or cascades of calls that occurred within a predefined time-period after each other. This time period is preferably shorter than the warm-time period, but it is preferred that it is longer than a second.

Based on this analysis of the time distribution an "optimal distribution" of function-modules on the computing devices is computed. Since it is difficult to define what is "optimal", since there may be constraints against an "optimal" distribution. For example, a computing device may have a maximum memory space for function-modules or there may be a maximum total runtime of a computing device. It could nevertheless be said that a distribution is "optimal", when the latency time is minimized in the light of all constraints.

Generally, it is an object of the method to find a target-grouping of function-modules on the computing devices that provides less latency times and/or more warm calls than the initial distribution. This target-grouping may be optimized by repeating the method with the target-grouping as new initial distribution, but there may be found an optimal target-grouping after the first process of the method. The expression "latency time" means here the starting time period of an environment module (i.e. the period between the starting of the environment module and the starting of the function-module or short the "cold-start latency".

The analysis and computing could be achieved by using machine learning models trained for finding patterns in calls of function-modules or based on analytical optimization methods.

It should be noted that the time distributions may systematically differ for different indicators and for different times of a day, week, month or year. However, the analysis may be based on a maximum predefined time-period where all indicators may be covered. On the other hand, there could be different predefined time-periods for analyzing different indicators.

When a target-grouping of function-modules is computed, groups of function-modules are formed based on this target-grouping.

When the groups are formed, function-modules of the same group are arranged on the same computing device. This means that there is a "cluster" or "deployment unit" of different function-modules that are copied onto the same computing device. Thus, function-modules are especially merged or combined.

This method combines individual function-modules, e.g. by using an internal dispatcher and reduces both latency and cost of function calls and operational overhead. For reducing the overhead introduced by multiple functions is to combine functions by putting more than one piece of code into a combined function and dispatch internally on incoming requests to the proper code.

However, with a larger number of functions it is difficult to find the best combination of functions. To solve that, the number of calls to a function and its memory and CPU requirements should be taken into account.

The time distribution could be regarded as a metric of function invocations (calls) and used to optimize the resource usage. The execution of functions is monitored and the following indicators about executing functions is preferably regarded:
- The number of invocations of a function (cold and warm): For a given time window, continued invocations keep the function "warm". The number of invocations may vary of time of day, day of week, season, and other influencing factors. A subset of the set of Lambda functions may share the characteristics when they are used, which indicates to merge them into one deployment unit. This could be subsumed under the indicator "order".
- Elapsed time of function calls (cold and warm): Combining functions f₁ and f₂ for instance may decrease the number of executions in a cold environment as executing function f₁ may warm up the environment for executing "unrelated" function f₂ (or the other way round). When a function handles requests faster, it may handle more requests in a warm environment as it is available sooner. This could also be subsumed under the indicator "order".
- Call graph: If one function always calls another, it saves latency and cost to collocate them. Due to the dispatch functionality, the second function is still callable individually. This could be subsumed under the indicator "nesting".
- Actual memory requirements: If some functions working together share some objects, function collocation reduces their total memory requirements. This could be subsumed under the indicator "same datasets".
- Date and time of function invocations: there may be differences in the time distribution in the morning, during the weekend, or on hot days. There can be many factors that influence the load on the functions. Collocating functions with similar usage profile, keeps them "warm". This may be regarded with all indicators or with some indicators.

There are potential constraints that should be regarded for computing the target-grouping:
- Privileges defined for a function: If functions work with different objects, they may have been granted different privileges. The user can specify whether security or cost should take precedence. In the former case collocation is possible only when privileges match.
- Programming language of function: functions that share the same environment should be candidates for a group and functions that run in different environments should not be grouped.

A system according to the invention solves organizing a computing network, the computing network comprising a plurality of computing devices arranged in a network structure designed such that any computing device is able to receive an output of another computing device, wherein every computing device
a) comprises software modules in form of an environment-module and a function-module, and the function-module is able to be executed in an environment provided by the environment module and is designed to produce output data by processing received input data, and
b) is organized such that after initially receiving data to be processed by a function-module,
   i) the environment module is activated unless it is not already active,
   ii) the data is processed by the function-module in the environment of the activated environment module,
   iii) the processed data is outputted and
   iv) after the output, the environment module stays activated a predefined warm-time period until it is deactivated.

The system is preferably designed for executing a method according to the invention and comprises the following components:
- an examination unit designed for examining the data-flow of the computing network of an initial distribution of function-modules in the computing network, the examination being based on predefined indicators, and generating a time distribution based on
   i) an order of an execution of function-modules and/or
   ii) a nesting of an execution of function-modules and/or
   iii) a use of same external datasets by function-modules on the computing devices,
- an analyzing unit designed for analyzing the time distribution and computing a target-grouping of function-modules on the computing devices that provides less latency times and/or more warm calls than the initial distribution,
- a grouping unit designed for forming groups of function-modules based on the target-grouping,
- an arrangement unit designed for arranging function-modules of the same group on the same computing device.

The function of the units has already been described above.

The analyzing unit preferably comprises a machine-learning model that has been trained for detecting temporal patterns in the time distribution, especially concerning function calls.

A computing network according to the invention comprises a plurality of computing devices in a network structure and designed such that any computing device is able to receive an output of another computing device, wherein every computing device
a) comprises software modules in form of an environment-module and a function-module, and the function-module is able to be executed in an environment provided by the environment module and is designed to produce output data by processing received input data, and
b) is organized such that after initially receiving data to be processed by a function-module,
   i) the environment module is activated unless it is not already active,
   ii) the data is processed by the function-module in the environment of the activated environment module,
   iii) the processed data is outputted and
   iv) after the output, the environment module stays activated a predefined warm-time period until it is deactivated,

The computing network differs from the state of the art in that function-modules are organized in the computing network with a method according to the invention and/or by a system according to the invention.

Some units or modules of the system mentioned above can be completely or partially realized as software modules running on a processor of a respective computing system. A realization largely in the form of software modules can have the advantage that applications already installed on an existing computing system can be updated, with relatively little effort, to install and run these units of the present application. The object of the invention is also achieved by a computer program product with a computer program that is directly loadable into the memory of a computing system, and which comprises program units to perform the steps of the inventive method, at least those steps that could be executed by a computer, when the program is executed by the computing system. In addition to the computer program, such a computer program product can also comprise further parts such as documentation and/or additional components, also hardware components such as a hardware key (dongle etc.) to facilitate access to the software.

A computer readable medium such as a memory stick, a hard-disk or other transportable or permanently-installed carrier can serve to transport and/or to store the executable parts of the computer program product so that these can be read from a processor unit of a computing system. A processor unit can comprise one or more microprocessors or their equivalents.

Particularly advantageous embodiments and features of the invention are given by the dependent claims, as revealed in the following description. Features of different claim categories may be combined as appropriate to give further embodiments not described herein.

Preferably, the computing of the target-grouping comprises the following steps:
- determine function-modules that are executed on computing devices in the warm-time period of another computing device and determining how often these function-modules are executed in the warm-time period of this other computing device,
- arranging function-modules (all or a part) that are more often executed in the warm-time period of this other computing device compared to a predefined threshold value in a group together with the function-module of this other computing device,
preferably wherein the arrangement of function-modules in groups is based on a control-flow graph (or "call graph"), representing calling correlations between these function-modules.

It should be noted that for reducing latency, it would be advantageous, if all functions running in the same environment are deployed in one group. However, the sense of computing networks is that many "small" computing units are combined to solve a complex task. Thus, it is a task for optimizing the workflow (and the target-grouping) in that only some functions of an environment are grouped in one group and other functions running in this environment are grouped in another group.

It is especially preferred that a function is duplicated and put in multiple groups. This is especially advantageous for simple functions (with only a small requirement of memory), in the case this function is executed in the warm time of functions of this group or the other functions are executed in the warm time of this function. Thus, both groups could be kept "warm" by this function.

Preferably, the computing of a target-grouping comprises the steps:
- determining function-modules that are executed within a predefined time-period, especially the warm-time period, after each other,
- arranging these function-modules together in a group.

Preferably, the computing of a target-grouping comprises the steps:
- determining function-modules that are executed in the same environment,
- arranging these function-modules together in a group.

Preferably, for the computing of a target-grouping, a computing device of the computing network is chosen and determined, when a function of this computing device is called, what other function running in the same environment is called afterwards within the warm-time period of this computing device. This could be done for all computing devices of the computing network.

Preferably, the time distribution is generated such that it comprises information about the time of the execution of the function-modules and the time distribution is analyzed for execution patterns at different time periods and optimal distributions of function-modules on the computing devices are computed for these different time periods.

Preferably, individual groups of function-modules are formed for different time periods. There may be a first group of functions for the day and a second group for the night. These groups may then be arranged on different computing devices of the computing network. Additionally or alternatively, these groups could be arranged on the same computing device with the groups being alternately deactivated during different time periods. It depends how complex these groups are and what memory they need. This is advantageous in the case memory space is cheap compared with computing-time.

Especially in the case computing time is cheaper than memory space, one group could be copied to a computing device to be executed at a first time period and this group could then be overwritten when the other group is copied to this computing device to be executed at a second time period. So e.g. at the morning, the first group is copied on a computing device to work for the day and in the evening the other group is copied to the computing device to work for the night.

Preferably, a machine learning model is trained to search for patterns of execution of function-modules within a predefined period of time and/or of serial execution of function-modules, especially of function-modules executed in the same environment.

When merging multiple functions into a single deployment unit (group), calls keep each other warm mutually. A call to one function keeps the deployment unit warm. Especially if both functions call each other, a lower latency time (no remote invocation) and no risk of cold start (deployment unit already runs) applies. The costs will be lower as the calling function does not need to wait and be paid for.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an example of a computer network with a system according to the invention.
Figure 2 shows a block diagram of the method according to the invention.
Figure 3 shows the interaction of environment module, function-module and warm-time period with multiple use.
Figure 4 shows an example for the processing of data and the output of function-modules once with two separate computing devices and in one computing device.
Figure 5 shows an example for the grouping of function-modules.

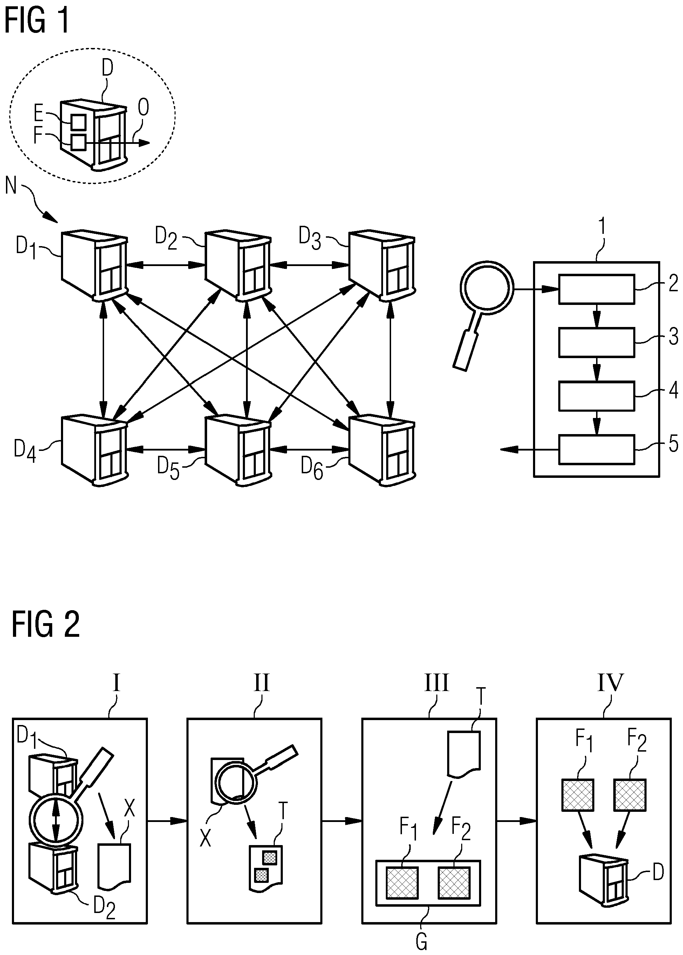

Figure 1 shows an example of a computer network N with a system 1 according to the invention. On top, a typical computing device D is shown with an environment module E and a function-module F being present as software modules in a memory of the computing device D. For this example, every computing device D of the computing network N should have this setup.

The computing network N comprises a plurality of such computing devices D in a network structure. The network is designed such that any computing device D is able to receive an output of another computing device D. In this example, there are six computing devices D₁, D₂, D₃, D₄, D₅, D₆, wherein the computing devices D₂, D₅ in the middle are connected with the outputs of all other computing devices (arrows) and the computing devices D₁, D₄ at the left side are not connected to the computing devices D₃, D₆ at the right side. However, this is only an example, it is particularly preferred that every computing device D is connected with every other computing device D.

As said above, every computing device D comprises software modules in form of an environment-module E and a function-module F. Each function-module F is able to be executed in an environment provided by the environment module E and is designed to produce output data O by processing received input data.

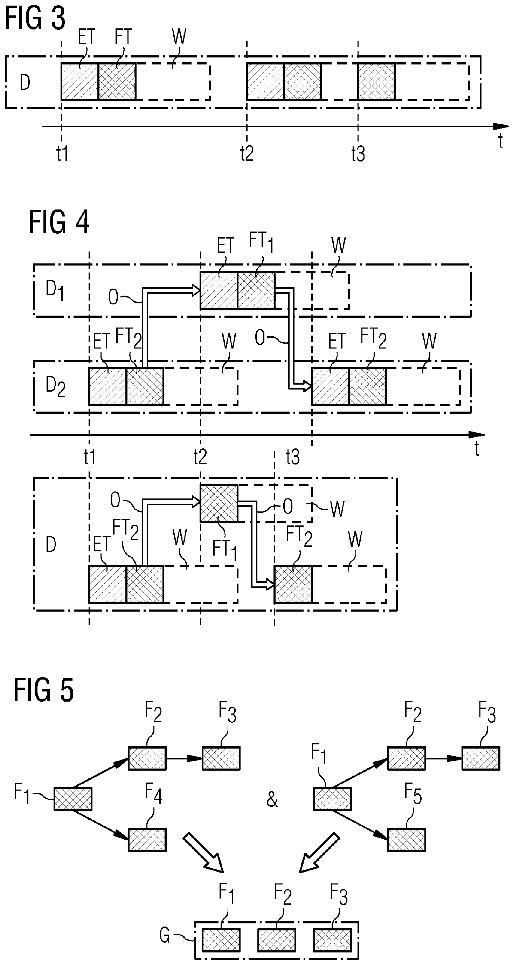

Furthermore, each function-module F is organized such that after initially receiving data to be processed by this function-module F, the environment module E is activated unless it is not already active, the data is processed by the function-module F in the environment of the activated environment module E, the processed data is outputted and after the output, the environment module E stays activated a predefined warm-time period W until it is deactivated (see e.g. figure 3).

The system 1 for organizing this computing network N comprises an examination unit 2, an analyzing unit 3, a grouping unit 4 and an arrangement unit 5.

The examination unit 2 is designed for examining the data-flow of the computing network N of an initial distribution of function-modules F in the computing network N. The examination is based on predefined indicators, and generating a time distribution X. These indicators are an order of an execution of function-modules F and/or a nesting of an execution of function-modules F and/or a use of same external datasets by function-modules F on the computing devices D. Thus, the time distribution X is e.g. based on the time of calling functions or the time period between the call of function-modules F.

The analyzing unit 3 is designed for analyzing the time distribution X and computing a target-grouping T of function-modules F on the computing devices D that provides less latency times and/or more warm calls than the initial distribution. The analyzing unit 3 may comprise a machine-learning model that has been trained for detecting temporal patterns in the time distribution X, especially concerning function calls.

The grouping unit 4 is designed for forming groups G of function-modules F based on the target-grouping T.

The arrangement unit 5 designed for arranging function-modules F of the same group G on the same computing device D.

Figure 2 shows a block diagram of the method for organizing a computing network N as e.g. shown in figure 1.

In step I, the data-flow of the computing network N is examined for an initial distribution of function-modules F in the computing network N. The examination is based on predefined indicators, and generating a time distribution X based on an order and/or nesting of an execution of function-modules F and/or a use of same external datasets by function-modules F on the computing devices D.

In step II, the time distribution X is analyzed and a target-grouping T of function-modules F on the computing devices D is computed. This target grouping is computed such that it provides less latency times and/or more warm calls than the initial distribution.

For forming the target-grouping T function-modules F could be determined that are executed on computing devices D in the warm-time period W of another computing device D and determining how often these function-modules F are executed in the warm-time period W of this other computing device D. Then function-modules F are arranged in a group G that are more often executed in the warm-time period W of this other computing device D compared to a predefined threshold value in a group together with the function-module F of this other computing device D. It is advantageous when function-modules F are determined that are executed in the same environment. A function-model F could be duplicated and put in two or more groups G.

In step III, groups G of function-modules F are formed based on the target-grouping T.

In step IV function-modules F of the same group G are arranged on the same computing device D.

Figure 3 shows the interaction of environment module E, function-module F and warm-time period W in one computing device D. At the time t1, the function-module F is called. To be executed, the environment module must be started in order to provide the environment. The starting is done during the "environment time" ET (i.e. the latency time ET). After the environment is ready, the function-module F works. This is done in the "function time" FT. After that, the computing device waits before ending the environment for a warm-time period W.

At the time t2, after the warm-time period, the function-module F is called again. This is a cold start that needs the full circle as explained for the first time t1.

At the time t3, the function-module F is called again, but now in the warm-time period W. This is a warm start that does not need the start of the environment. Thus, the time to start the environment ET (latency time ET) could be spared.

Figure 4 shows an example for the processing of data and the output of function-modules F once with two separate computing devices D₁, D₂ and in one computing device D.

The setup for each computing module is the same as described in figure 3. Here, a second function-module F₂ (after a computing time FT₂) provides output data O to a first function-module F₁ that again (after a computing time FT₁) provides output data O to the second function-module F₂. When running in two computing devices D₁, D₂, there is always a cold start needed. Although function-module F₂ is called by function-module F₁ in the warm-time period W of the first computing device D₁ (and also the other way round), all function-modules F₁, F₂ are called out of the warm-time period W of the respective computing device D₁, D₂ they are executed. Thus this is a cold call.

In difference, when executed on the same computing device D in the same environment, all calls are warm calls and the time to start the environment model ET is only needed at the beginning. The whole process needs less time than when executed on two computing devices D₁, D₂. Functions deployed in dedicated deployments, time needed for environment initialization is reduced. A single function instance can handle all requests.

Figure 5 shows an example for the grouping of function-modules F. From the time distribution X (see e.g. figure 2) it could be learned that a first function-module F₁ always calls a second and a third function-module F₁, F₃, but one time a fourth function-module F₄ is called right after the first function-module F₁ and another time a fifth function-module F₅ is called. Thus, it would be better to group the first, second and third function-module F₁, F₂, F₃ and ignore the fourth and fifth function-module F₄, F₅.

For example, in AWS, a Lambda function 1 always uses a Lambda functions 2 and 3, so "inlining" those function calls (i.e. collocating function 1, function 2, and function 3) reduces overall latency of calling Lambda function 1. Profiling shows that Lambda functions 4 and 5 are not actually called and collocating these functions does not yield any savings.

The method evaluates data collected for different Lambda functions and determines a combination of functions that reduces operational overhead and resource requirements. The method provides dispatching functions for different programming languages, deploys individual functions into a combined Lambda function, and changes the deployment so that the combined function replaces the original set of functions.

The observation time (i.e. the time for gathering metrics) should be representative for the usage scenarios, so optimization results can be applied and pay off.

If there are soft factors that may influence the load on the different functions, a machine learning solution can be superior to a conventional optimization: if the weather conditions for instance are suspected, the weather forecast can be added to the list of input values. The actual load is measured for various weather forecasts, allowing a machine-learning algorithm to learn the best merge and distribution of the set of lambda functions. Reliable calculations require significant test data.

The method executes this optimization step multiple times to improve resource requirements of function invocations continually as their usage pattern changes over time. The purpose or use-case dependent optimization of merging multiple functions into a single deployment unit (group G).

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements. The expression "a number of" means "at least one". The mention of a "unit" or a "device" does not preclude the use of more than one unit or device. The expression "a number of" has to be understood as "at least one". Independent of the grammatical term usage, individuals with male, female or other gender identities are included within the term.

## Claims

1. A method for organizing a computing network (N), the computing network (N) comprising a plurality of computing devices (D) arranged in a network structure and designed such that any computing device (D) is able to receive an output of another computing device (D), wherein every computing device (D)
a) comprises software modules in form of an environment-module (E) and a function-module (F), and the function-module (F) is able to be executed in an environment provided by the environment module (E) and is designed to produce output data (O) by processing received input data, and
b) is organized such that after receiving data to be processed by a function-module (F),
i) the environment module (E) is activated unless it is not already active,
ii) the data is processed by the function-module (F) in the environment of the activated environment module (E),
iii) the processed data is outputted and
iv) after the output, the environment module (E) stays activated a predefined warm-time period (W) until it is deactivated,
the method comprising the steps:
- examining the data-flow of the computing network (N) of an initial distribution of function-modules (F) in the computing network (N), the examination being based on predefined indicators, and generating a time distribution (X) based on
i) an order of an execution of function-modules (F) and/or
ii) a nesting of an execution of function-modules (F) and/or
iii) a use of same external datasets by function-modules (F)
on the computing devices (D),
- analyzing the time distribution (X) and computing a target-grouping (T) of function-modules (F) on the computing devices (D) that provides less latency times (ET) and/or more warm calls than the initial distribution,
- forming groups (G) of function-modules (F) based on the target-grouping (T),
- arranging function-modules (F) of the same group (G) on the same computing device (D).

2. The method according to claim 1, wherein the computing of the target-grouping (T) comprises the steps:
- determine function-modules (F) that are executed on computing devices (D) in the warm-time period (W) of another computing device (D) and determining how often these function-modules (F) are executed in the warm-time period (W) of this other computing device (D),
- arranging function-modules (F) that are more often executed in the warm-time period (W) of this other computing device (D) compared to a predefined threshold value in a group together with the function-module (F) of this other computing device (D),
preferably wherein the arrangement of function-modules (F) in groups (G) is based on a control-flow graph, representing calling correlations between these function-modules (F).

3. The method according to claim 1, wherein for forming groups (G), a function-model (F) is duplicated and put in two or more groups (G).

4. The method according to one of the preceding claims, wherein the computing of a target-grouping (T) comprises the steps:
- determining function-modules (F) that are executed within a predefined time-period, especially the warm-time period (W), after each other,
- arranging these function-modules (F) together in a group (G) .

5. The method according to one of the preceding claims, wherein the computing of a target-grouping (T) comprises the steps:
- determining function-modules (F) that are executed in the same environment,
- arranging these function-modules (F) together in a group (G) .

6. The method according to one of the preceding claims, wherein for the computing of a target-grouping (T), a computing device (D) of the computing network (N) is chosen and determined, when a function of this computing device (D) is called, what other function running in the same environment is called afterwards within the warm-time period (W) of this computing device (D), preferably wherein this is done for all computing device (D)s of the computing network (N) .

7. The method according to one of the preceding claims, wherein the time distribution (X) comprises information about the time of the execution of the function-modules (F) and the time distribution (X) is analyzed for execution patterns at different time periods and optimal distributions of function-modules (F) on the computing devices (D) are computed for these different time periods.

8. The method of claim 7, wherein individual groups (G) of function-modules (F) are formed for different time periods and
- these groups (G) are arranged on different computing devices (D) of the computing network (N), and/or
- these groups (G) are arranged on the same computing device (D) with the groups (G) being alternately deactivated during different time periods, and/or
- one group (G) is copied to a computing device (D) to be executed at a first time period and this group (G) is overwritten when the other group (G) is copied to this computing device (D) to be executed at a second time period.

9. The method according to one of the preceding claims, wherein a machine learning model is trained to search for patterns of execution of function-modules (F) within a predefined period of time and/or of serial execution of function-modules (F), especially of function-modules (F) executed in the same environment.

10. A system (1) for organizing a computing network (N), the computing network (N) comprising a plurality of computing devices (D) arranged in a network structure designed such that any computing device (D) is able to receive an output of another computing device (D), wherein every computing device (D)
a) comprises software modules in form of an environment-module (E) and a function-module (F), and the function-module (F) is able to be executed in an environment provided by the environment module (E) and is designed to produce output data (O) by processing received input data, and
b) is organized such that after initially receiving data to be processed by a function-module (F),
i) the environment module (E) is activated unless it is not already active,
ii) the data is processed by the function-module (F) in the environment of the activated environment module (E),
iii) the processed data is outputted and
iv) after the output, the environment module (E) stays activated a predefined warm-time period (W) until it is deactivated,
the system (1) comprising:
- an examination unit (2) designed for examining the data-flow of the computing network (N) of an initial distribution of function-modules (F) in the computing network (N), the examination being based on predefined indicators, and generating a time distribution (X) based on
i) an order of an execution of function-modules (F) and/or
ii) a nesting of an execution of function-modules (F) and/or
iii) a use of same external datasets by function-modules (F)
on the computing devices (D),
- an analyzing unit (3) designed for analyzing the time distribution (X) and computing a target-grouping (T) of function-modules (F) on the computing devices (D) that provides less latency times (ET) and/or more warm calls than the initial distribution,
- a grouping unit (4) designed for forming groups (G) of function-modules (F) based on the target-grouping (T),
- an arrangement unit (5) designed for arranging function-modules (F) of the same group (G) on the same computing device (D).

11. The system according to claim 10, wherein the analyzing unit (3) comprises a machine-learning model that has been trained for detecting temporal patterns in the time distribution (X), especially concerning function calls.

12. A computing network (N) comprising a plurality of computing devices (D) in a network structure and designed such that any computing device (D) is able to receive an output of another computing device (D), wherein every computing device (D)
a) comprises software modules in form of an environment-module (E) and a function-module (F), and the function-module (F) is able to be executed in an environment provided by the environment module (E) and is designed to produce output data (O) by processing received input data, and
b) is organized such that after initially receiving data to be processed by a function-module (F),
i) the environment module (E) is activated unless it is not already active,
ii) the data is processed by the function-module (F) in the environment of the activated environment module (E),
iii) the processed data is outputted and
iv) after the output, the environment module (E) stays activated a predefined warm-time period (W) until it is deactivated,
wherein function-modules (F) are organized in the computing network (N) with a method according to one of claims 1 to 9 and/or by a system (1) according to claim 10 or 11.

13. A computer program product comprising instructions which, when the program is executed by a computer, cause the computer to carry out the steps of the method of any of claims 1 to 9.

14. A computer-readable storage medium comprising instructions which, when executed by a computer, cause the computer to carry out the steps of the method of any of claims 1 to 9.
